# EUROPEAN PATENT APPLICATION

(11) **EP 3 920 122 A1**
(43) Date of publication of application: **08.12.2021**
(21) Application number: 21275062.4
(22) Date of filing: 26.05.2021
(51) Int. Cl.: G06Q 30/06, G06Q 10/00

(54) **TABLEWARE OR RENTAL ITEM TRACING SYSTEM AND METHOD OF USE THEREOF**

(30) Priority: 01.06.2020 GB 202008161
(71) Applicant: Bond, Jonathan, Keighley, Yorkshire BD22 7NH (GB)
(72) Inventor: Bond, Jonathan, Keighley, Yorkshire BD22 7NH (GB)
(74) Representative: Tomkinson, Alexandra

(57) **Abstract**

A tableware or rental item tracing system is provided. The system includes at least one rental item for renting or lending to a third party in use or at least one item of tableware. The micro-processing means are provided on, in or in association with said at least one rental item or item of tableware.

## Description

This invention relates to a rental item tracing system and method of use thereof, and particularly but not necessarily exclusively, to a tableware tracing system and to a method of use thereof.

Although the following description refers almost exclusively to a rental item tracing system wherein the rental item is an item of tableware, and particularly a disposable cup, it will be appreciated by persons skilled in the art that the tracing system could be used on any rental item, such as for example, an item of sports equipment or tool hire, such as a golf club, tennis racket, bicycle, power tool, machinery and/or the like, or any item of tableware, such as for example on a plate, cup, bottle, tray, bowl, cutlery and/or the like, and can be disposable or non-disposable. Furthermore, in addition to tracing an item of tableware or a rental item, the system can have other uses, such as recycling, inventory control, user behaviour analysis and/or the like.

Huge numbers of plastic bottles and drink cups are used every year, particularly at mass gatherings, such as football matches, music festivals, concerts, theatres, sporting events and/or the like. These bottles and cups are often discarded after use and result in large expenditure and effort by the event organiser to collect and dispose of them after the event. Attempts have been made to try and encourage users to recycle bottles and cups by providing, for example, a deposit scheme, whereby a user has a financial incentive to return the cup or bottle back to the vendor from which they purchased the same. However, at large events, the potential queues of people and the time taken to provide a refund of user deposits makes such systems impractical and prohibitive. In addition, some unscrupulous individuals have been found to steal user's cups or bottles so that they can collect the deposit money. Since there is currently no practical or efficient way of encouraging users to return bottles and cups to a vendor or to dispose of them in a proper disposal receptacle, cups and bottles are often made as single use items, they are often flimsy and are easily damaged and they create a huge environmental problem.

It is therefore an aim of the present invention to provide a rental item or tableware tracing system that overcomes the abovementioned problems.

It is a further aim of the present invention to provide a method of using a rental item or tableware tracing system that overcomes the abovementioned problems.

It is a yet further aim of the present invention to provide a cup or bottle tracing system and/or method that overcomes the abovementioned problems.

It is a yet further aim of the present invention to provide a rental item, tableware, cup and/or bottle recycling system and/or method that overcomes the abovementioned problems.

It is a yet further aim of the present invention to provide a tableware, cup and/or bottle management system and/or method that overcomes the abovementioned problems.

According to a first aspect of the present invention there is provided a tableware or rental item tracing system, said system including at least one rental item for renting or lending to a third party in use or at least one item of tableware, characterised in that micro-processing means are provided on, in or in association with said at least one rental item or item of tableware.

In one embodiment the rental item tracing system is a tableware tracing system and the at least one rental item is an item of tableware.

Preferably a rental item is defined as an item that is suitable for renting out, hiring out or lending in use. The rental item is typically owned by a first party and rented, hired or borrowed by a different third party on a temporary basis, preferably but not exclusively, in return for payment made by the third party to the first party, intermediary acting for the first party or owner of the rental item.

Preferably, the rental item is an item where a monetary deposit may be paid by the third party to the first party, intermediary acting for the first party or owner of the rental item, and the monetary deposit is repaid back to the third party on return of the rental item to the first party, intermediary acting for the first party or owner of the rental item. Further preferably the deposit is repaid on return of the rental item in the same or substantially same condition in which it was rented, hired or lent out in.

For example, a drink cup may be owned by a cup manufacturer and an intermediary in the form of a drinks vendor or bar owner in a sports venue may provide purchased drinks in the cup or bottle to a customer. The drink purchase may include a deposit paid for the cup and bottle by the customer, such that if the customer returns the cup or bottle when finished with to the drinks vendor, bar owner, a pre-determined location or recycling point, the customer is able to have their deposit refunded back to them.

Preferably the rental item is an item of tableware, an item of sports equipment, an item of machinery, a wrist band, a venue pass to allow access to one or more parts of a venue in use and/or the like.

Preferably the item of sports equipment includes any or any combination of a golf club, putting club, golf ball, tennis racket, tennis ball, badminton racket, shuttlecock, table tennis bat, table tennis ball, swimming float, swimming inflatable, boat, bicycle and/or the like.

Preferably the item of machinery includes any or any combination of a power tool, garden tool, building tool or machinery and/or the like.

Preferably the wrist band is of a type worn around the wrist of a user allowing entry into a venue and/or one or more parts of a venue in use.

Preferably the micro-processing means is arranged to store, process and/or communicate data in use.

Further preferably the micro-processing means is arranged to store, communicate and/or process data relating to any or any combination of: the rental item, the at least one item of tableware; a rental item owner; a vendor, distributor and/or provider of the at least one item of tableware or rental item; or a user of the at least one item of tableware or rental item, in use.

By providing an item of tableware or rental item with micro-processing means, this allows data to be stored, communicated and/or processed that can be used to track and/or trace the item of tableware or rental item, or a user of the item of tableware or rental item, that can be used as part of a recycling system, that allows and/or encourages re-use and/or recycling of the item of tableware or rental item, that can be used for inventory purposes, that can be used for management of the item of tableware or rental item, that can be used for people control in a venue, and/or the like.

Preferably reference to "data" can include one or more data signals, data packets, data files, data content and/or the like.

Preferably the at least one item of tableware or rental item is a portable or substantially portable item. For example, the at least one item of tableware or rental item can be carried and/or used by a user at different locations in a venue, such as for example, at a sporting venue, leisure venue, concert hall venue, theatre venue, restaurant venue and/or the like.

Preferably the at least one item of tableware includes or consists of any or any combination of a cup, glass, wine glass, bottle, plate, tray, bowl, item of cutlery, pot, pan, dish, container, food or drink receptacle and/or the like.

In one embodiment the rental item of at least one item of tableware is considered to be a disposable item. Preferably such items are manufactured for a single use, for use over a relatively short period of time, or a small number of uses before being disposed of.

In one embodiment the rental item or at least one item of tableware is considered to be a non-disposable and/or recyclable item. Preferably such items are manufactured for multiple uses, for use over a relatively long period of time, or are generally not considered to be disposable.

The ability for the rental item or item of tableware to be returned and/or re-used typically provides an incentive to the manufacturer to improve the quality of the tableware or rental item, thereby making it stronger and less easily damaged in use. This provides an enhanced experience for a user using the rental item or item of tableware.

In one embodiment the system includes any or any combination of a central or master micro-processing means, central or master computer, slave micro-processing means, slave computer or computers, cloud based information sharing platform and/or the like.

In one example, the one or more slave micro-processing means or computers communicate with central or master computer or micro-processing means.

Preferably the micro-processing means provided on or associated with the item of tableware or rental item is arranged to communicate directly or indirectly with the central or master micro-processing means, the central or master computer, one or more slave computers or micro-processing means, the cloud based information sharing platform and/or the like to allow data to be transferred to, with and/or between the same in use.

Preferably the communication between the micro-processing means of the tableware or rental item, the central or master micro-processing means, the central or master computer, the one or more slave computers or micro-processing means, the cloud based information sharing platform and/or the like is one way communication, two way communication or multi-way communication.

In one embodiment communication means are provided on, with or associated with the tableware or rental item micro-processing means, the central or master micro-processing means, the central or master computer, the one or more slave computers or micro-processing means, the cloud based information sharing platform and/or the like, and/or a tableware data reading means to allow the communication.

Preferably the communication means is arranged to communication data via wireless, wired, contact or contactless means.

Preferably the central or master micro-processing means, the central or master computer, the cloud based information sharing platform is located remote from and/or independently of the tableware micro-processing means and/or the one or more slave micro-processing means.

In one embodiment the system includes tableware or rental item data reading means or device arranged to receive and/or read data from the rental item or tableware micro-processing means, for processing data from the rental item or tableware micro-processing means, for communicating data to and/or from the rental item or tableware micro-processing means, for storing data received from the rental item or tableware micro-processing means, for communicating data with a central or master micro-processing means, a central or master computer, cloud based information sharing platform and/or the like.

Preferably the rental item or tableware data reading means includes micro-processing means.

Preferably communication of data between the tableware or the rental item micro-processing means and the tableware or rental item data reading means or device is one way, two way, via wired means, via wireless means, via contact means, via contactless means and/or the like.

Preferably communication of data between the rental item or tableware data reading means or device and the central or master micro-processing means, a central or master computer, cloud based information sharing platform and/or the like is one way, two way, via wired means, via wireless means, via contact means, via contactless means and/or the like.

Preferably unique identification means are provided on or associated with each rental item, item of tableware and/or the tableware or rental item micro-processing means, thereby allowing identification of the rental item or one item of tableware from other rental items or items of tableware in use.

Preferably the unique identification means can include any or any combination of one or more codes, letters, numbers, symbols, lines, images, QR codes, bar codes and/or the like.

In one embodiment the micro-processing means of the tableware or rental item, the rental item or tableware data reader means and/or the central or master micro-processing means includes or is in the form of a microchip, communication chip, Near Field Communication (NFC) chip and/or the like.

Preferably the micro-processing means of the tableware or rental item, the rental item or tableware data reader means and/or the central micro-processing means, central computer or cloud based information sharing platform can include data storage means or separate data storage means provided on or associated with the same.

Preferably the micro-processing means of the tableware or rental item, the tableware or rental item data reader means and/or the central micro-processing means, central computer or cloud based information sharing platform can include communication means or separate communication means provided on or associated with the same.

For example, the micro-processing means may include a transmitter and/or receiving for transmission and/or receiving one or more data items or data signals in use.

Preferably the communication means is arranged to communicate via any or any combination of Near Field Communication, one or more Infra-Red (IR) signals, Bluetooth, one or more radio frequency signals, WIFI, wired means, a contact pad and/or the like.

In one embodiment the tableware or rental item micro-processing means can be integral with, or fixedly attached or detachably attached via attachment means to the item of tableware or rental item.

For example, the micro-processing means can be embedded within the item of table ware or rental item.

In one example, the micro-processing means is adhered, welded and/or heat-welded to an item of tableware or rental item, such as for example to an external or interior surface of the item of tableware or rental item.

In one embodiment the attachment means can include any or any combination of adhesive, welding, heat-welding, friction fit, one or more clips, brackets, ties, interengaging members and/or the like.

Preferably the item of tableware or rental item is made from any or any combination of plastic, wood, metal, glass, paper, cardboard, polystyrene, ceramic, pottery and/or the like.

Preferably the item of tableware can be made from transparent material, non-transparent or opaque material and/or the like.

Preferably the tableware or rental item micro-processing means can be hidden from a user of the item of tableware or rental item, or it can be visible to a user of the item of tableware or rental item.

In one embodiment the item of tableware is in the form of a cup that has valve means associated with a wall of the cup, and preferably a base wall of the cup, for filling the cup with a liquid, beverage, substance and/or the like in use.

Thus, in one example, the cup is a bottom filled cup that can be used with a bottom filled dispensing system.

In one example, the valve means is a silicon valve means that is provided on a base wall of the cup to allow the cup to be filled with a liquid via the valve means in use.

In one embodiment the data that is processed, stored, transmitted to and/or from received from the tableware or rental item micro-processing means, the tableware or rental item data reader means and/or the central or master micro-processing means, central or master computer or cloud based information sharing platform can include any or any combination of: the rental item or tableware unique identification means; when, by whom and/or where the rental item or item of tableware was manufactured, distributed and/or sold; when, by whom and/or where the rental item or item of tableware was delivered to a venue; when, where and/or by whom the rental item or item of tableware was last cleaned; when, where and/or by whom a food, beverage, liquid, solid and/or the like was used and/or served with the item of tableware; a value of a sale associated with the rental item or item of tableware and/or a food, beverage, liquid, solid and/or the like used or served with the item of tableware; a value of a deposit associated with the rental item or item of tableware; identification of a food, beverage, liquid, solid and/or the like that was served and/or used with the item of tableware; details of the user using the rental item or item of tableware, such as for example an age of a user or whether the user has an age restriction associated with them; when, by whom and/or where the rental item or item of tableware is returned to a pre-determined return location; confirmation that the rental item or item of tableware has been returned to a pre-determined return location; credit or payment card or purchase details relating to a customer of the rental item or item of tableware; the cleaning status of the item of the rental item or item of tableware; a time period of use of the rental item or item of tableware; Global Positioning Data (GPS) relating to where the rental item or item of tableware is or has been moved to in real time and/or over a period of time; a time period, date and/or the like.

In one embodiment the rental item or tableware data reader means can be an independent, standalone unit, or it can be provided on or associated with a beverage or food dispensing means or system.

For example, the Applicant has a co-pending patent application EP3617134 for a beverage dispensing system that has data reading and/or transmission means associated with the same. Features of the beverage dispensing system disclosed in EP3617134 is incorporated herein by reference.

In one embodiment visual and/or audio means are provided with or associated with the rental item or tableware data reader means to allow display of data or information to the user and/or sounding of data or information to the user. The data and/or information preferably relates to the item of tableware or rental item. For example, the visual means could include a display means, display member or display screen. The display screen could, for example display the words "THANK YOU FOR RETURNING YOUR CUP" and/or the like. Alternatively, a user may be asked if they wish to donate a deposit associated with the item of tableware or rental item to a charity and/or the like. In one example the audio means includes a speaker and/or microphone for sounding a message, alert, data and/or information for a user.

In one embodiment the central or master processing means can be provided at the same location as the rental item or tableware data reader means, can form part of the same or can be independent and/or remote to the same.

In one example, the central or master processing means, central or master computer or cloud based information sharing platform can use the tableware data for inventory purposes, to keep track of sales, vendors, employees, to track the location of the tableware or rental item, to track the location of users using the item of tableware or rental item, to record and/or determine cleaning processes associated with the item of tableware or rental item, to trace the item of tableware or rental item and/or the like.

Preferably software can be provided on or associated with the tableware or rental item micro-processing means, the tableware or rental item data reader means, the central or master processing means, the central or master computer or cloud based information sharing platform and/or the like to allow calculations associated with the tableware or rental item to be performed, such as for example, to calculate the total number of items of tableware or rental items that require washing, the total number of items used at a particular venue, the total number of items returned at a particular venue, pre-determined return location and/or the like. This allows reordering of tableware or rental items to be performed accurately and efficiently. For example, an item of tableware or rental item may only be allowed to be used a certain number of times before it is disposed of and a replacement item of tableware or rental item is ordered.

Preferably the display means includes or is arranged to display a user interface to allow a user to undertake one or more actions in relation to the item of tableware or rental item, such as for example directing a user to allow a deposit associated with the item of tableware or rental item to be refunded and/or the like.

In one embodiment the system includes a recycling unit or device for allowing recycling and/or return of the item of tableware or rental item to a required or pre-determined return location in use.

Preferably the recycling unit or device includes the tableware or rental item data reader means for reading, processing, storing and/or communicating data relating to the item of tableware or rental item, recycling or return of the item of tableware or rental item and/or the like.

Preferably the tableware or rental item data reader means is arranged in or in association with the recycling unit or device such that it can detect, read and/or communicate with an item of tableware or rental item being placed in or on the recycling unit or device in use.

Preferably the tableware or rental item data reader means reads and/or communicates with the tableware or rental item micro-processing means automatically once it is brought within a pre-determined distance of the same.

In one embodiment the tableware or rental item data reader means reads and/or communicates with the tableware or rental item micro-processing means on manual activation of the reader means in use.

Preferably the recycling unit or device includes a compartment or receptacle for storing and/or receiving the item of tableware or rental item after it has been recycled or returned by a user in use.

According to a second aspect of the present invention there is provided a method of using a tableware or rental item tracing system.

Preferably the method includes using any of the features hereinbefore mentioned.

According to a further aspect of the present invention there is provided a method of using a tableware or rental item tracing system, said system including at least one rental item for renting or lending to a third party in use or at least one item of tableware, characterised in that micro-processing means are provided on, in or in association with said at least one item of tableware or rental item and said method includes the step of storing, processing and/or communicating data via the rental item or tableware micro-processing means.

Preferably the method includes the step of a rental item or tableware data reader means reading data from the micro-processing means provided on or associated with the rental item or item of tableware and/or communicating data to or from the micro-processing means provided on or associated with the rental item or item of tableware.

Preferably the method includes the step or communicating data between, to and/or from micro-processing means provided on or associated with the rental item or item of tableware to a central or master micro-processing means, to a central or master computer, to a cloud based information sharing platform and/or the like, directly or indirectly via the rental item or tableware data reader means.

Preferably the method includes the step of returning or recycling the rental item or tableware item and receiving a deposit refund for the returning or recycling of the tableware item or rental item.

Preferably there is provided a computer program or software comprising instructions for carrying out the method steps undertaken by the rental item or tableware micro-processing means, the rental item or tableware data reader means and/or the central micro-processing means, central computer or cloud based information sharing platform.

According to a further aspect of the present invention there is provided a cup or bottle tracing system and/or method of use thereof.

According to a yet further aspect of the present invention there is provided a rental item, tableware, cup and/or bottle recycling system and/or method of use thereof.

According to a yet further aspect of the present invention there is provided a rental item, tableware, cup and/or bottle management system and/or method of use thereof.

Embodiments of the present invention will now be described with reference to the following figures, wherein:
Figure 1 is an illustration of an item of tableware in the form of a cup according to an embodiment of the present invention;
Figure 2 is a simplified schematic diagram showing communication between the cup in figure 1, a cup reader and a cloud based information sharing platform or central processing means according to an embodiment of the present invention; and
Figure 3 is a simplified illustration of a recycling unit according to an embodiment of the present invention.

In one embodiment of the present invention, a system is provided that allows the management and traceability of tableware in the form of a cup at a large venue, such as a football stadium or concert hall.

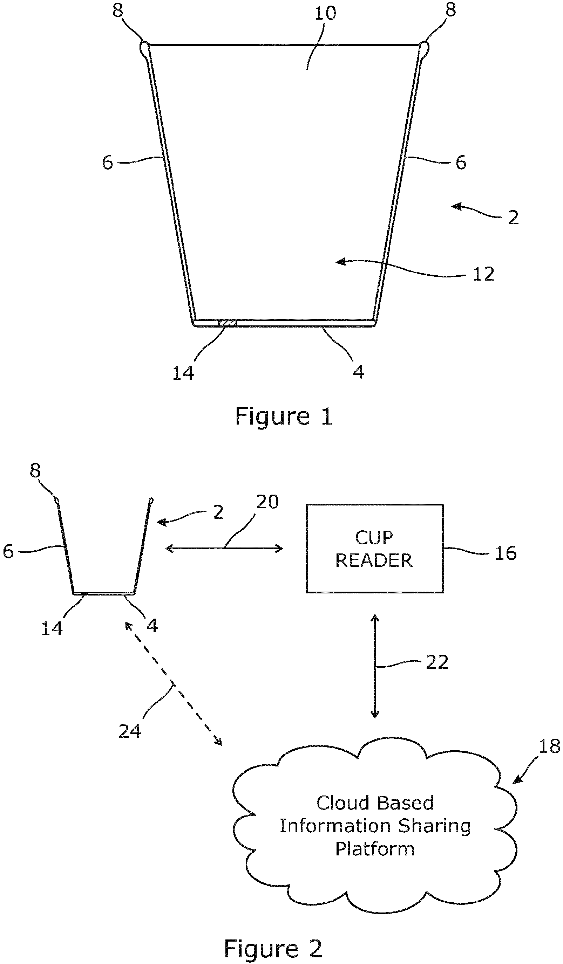

Referring to figure 1, there is illustrated an item of tableware in the form of a cup 2 according to the present invention. The cup in the illustration is a pint cup for holding an alcoholic drink, but it will be appreciated that the cup can be any suitable size, shape and/or design and can be used for holding any suitable beverage, such as a cold drink, a hot drink, an alcoholic drink, a non-alcoholic drink, tea, coffee, spirits, squash, water, juice, wine and/or the like. In addition, although the following description refers to an item of tableware in the form of a cup, it will be appreciated that similar processes and/or data can be performed on any item of tableware or any rental item.

The cup 2 has a base wall 4 capable of supporting the cup on a surface in use and side walls 6 protruding outwardly from the base wall 4. The free edge of the side walls 6 opposite to the base wall 4 are provided with a rim 8 defining an opening 10 of the cup therebetween. The base wall 4 and side walls 6 define a cavity 12 therebetween for the containment of a beverage, liquid, solid and/or gaseous substance in use.

In accordance with the present invention micro-processing means in the form of a micro-processing chip 14 is attached to an external surface of the base wall 4 of the cup 2 via heat welding. In this example, the cup 2 is made from plastic. The chip provides the means by which data relating to the cup, use of the cup, location of the cup, recycling of the cup and/or the like can be detected, processed, stored and/or communicated to other devices, processing means and/or the like.

Thus, in accordance with the present invention, data can be communicated to and from the cup's chip 14 to allow management, traceability and/or recycling of the cup in use.

The tracing system of the present invention typically includes a micro-processing data reading and transmission device 16 is provided for reading data from the cup's chip 14 and for transmitting data to the cup's chip 14 in use.

In one example of the tracing system in use, when a customer places an order for a drink with a drinks vendor, the server at the drinks vendor places the cup 2 on or near the data reading and transmission device 16 in such a manner that data is communicated between the cup 2 and device 16. This data communication can be done in a contact, contactless, wired and/or wireless manner as required. For example, the cup can be placed on a beverage dispensing system that has a device 16 incorporated into the same. On dispensing of a beverage from the dispensing system, the device 16 can be automatically activated to communicate with and/or receive data from the cup 2. This allows the system to be also incorporated into a vendor operated drinks station or a self-service drinks station.

In one example, the cup's chip 14 communicates a unique identification code to the device 16 to identify the cup 2 and the device 16 associates this identification code with data relating to the customer's order, such as the name of the drink ordered, the volume of drink dispensed, the cost of the drink of the ordered and/or the like. A cup deposit monetary value can also be associated with the cup 2 in some embodiments. This data can be stored both on the device 16 and is communicated to the cup's chip 14 for storage. In addition, or as an alternative, if the cup 2 is part of a recycling or return scheme, card payment details belonging to the customer that has paid for the drinks order can be temporarily recorded and stored on the cup's chip to allow automatic refund of the deposit back to the payment card when the cup is returned by the customer.

Thus, communication between the cup 2 and the device 16 can be one way, two way and/or wireless, as shown by arrow 20 in figure 2. The device 16 can store and process the data itself and/or the device 16 can communicate with a central micro-processing means, computer or cloud based information sharing platform 18 to processing and use of the data as required. The communication between device 16 and the cloud based information sharing platform 18 can be one way, two way and/or wireless, as shown by arrow 22. In one embodiment, it is also possible to provide the cup's chip to be capable of communication directly with the cloud based information sharing platform 18, a central micro-processing means, computer and/or the like, as shown by arrow 24. The communication 24 can be one way, two way and/or wireless as required.

Once a customer has finished with the cup 2, if they have paid a deposit for the cup 2 as part of the drinks sale, they can return their cup to the vendor where they purchased the cup and drink from, and/or an alternative cup return location. The cup 2 is returned to and detected by device 16, or a further device 16, and is located in such a manner with respect to the device 16 or further device 16 that the data from the cup is transmitted to the device 16. The device 16 can then automatically refund the deposit money onto the customer's payment card that was used to purchase the cup and drink. The customer's payment card details can then be deleted from the cup's chip 14 for security reasons to prevent or reduce the likelihood of fraud. This process takes place quickly and efficiently without the payment card being present and would not result in long queues at venues compared to manual credit card refunds performed manually by the vendor. It would also remove the problem associated with people stealing cups to receive the deposits on them, as the deposit would always be refunded to the original payment card owner.

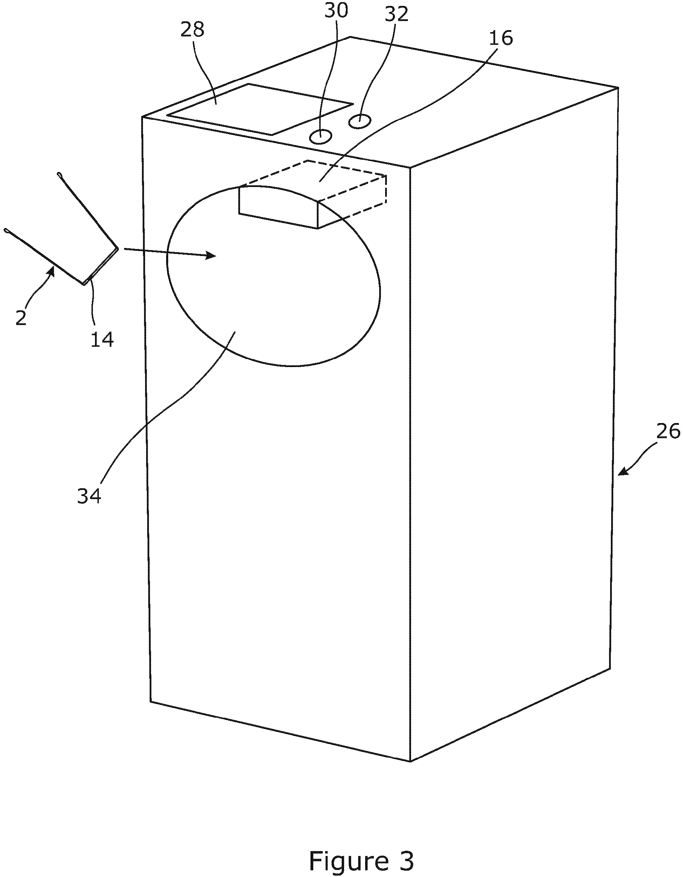

An example of a simplified recycling unit 26 is shown in figure 3. The recycling unit 26 is a recycling receptacle including an opening 34 therein for the location of a cup 2 according to the present invention. A data reading device 16 is provided adjacent opening 34 which is able to automatically detect and read data from the cup's chip 14 as it passes through the opening 34. Once the cup 2 has passed through the opening 34 is can fall, move to or be transported to a storage area within the unit 26 for disposal or cleaning at a later date. Recycling unit 26 is also provided with a display screen 28 that is associated with device 16. When the device 16 detects a cup being returned to the unit 26, it can activate a visual message on the display screen, such as for example thanking the user for returning the cup and/or asking the user if they wish to donate the cup deposit to a charity or back to their payment card. Buttons 30 32, can be provided to allow a user to make a selection as to what is to happen to the cup deposit.

Thus, in one example of the present invention , audio and/or visual means, such as for example a display screen or speaker could be associated with the device 16 and/or recycling unit 26 to allow information to be displayed or sounded to the user, such as "THANK YOU FOR RETURNING YOUR CUP", or providing the customer with an option to donate their deposit to a charity rather than putting the deposit money back on the customer's bank card and/or the like.

It is possible that the venue could advertise the charity donation value associated with a cup return deposit. It will be appreciated that options of different charity donations could be provided if required.

Other data that could be communicated between the cup's chip and the device 16 on return of the cup could include confirmation that the cup has been returned, the location the cup has been returned to, confirmation that the cup now needs to be cleaned and/or the like. This data can be used to track the movements of both the cup and a user of the cup within the venue from the point where the user purchased the cup, to the point where the user returned the cup. For example, Global Positioning System (GPS) means and data can be associated with the cup chip 14.

In addition, data can be provided on the cup's chip, the device 16 or platform 18 relating to how many times the cup has been used. This may be relevant if the cup can only be used a certain number of times before it is likely to become damaged or passes a pre-determined life cycle. If the cup is a single use cup, the data can be used to automatically calculate how many cups need to be reordered. The data can be used as to indicate how effective the recycling scheme is, how much cleaning of the venue has to be done (i.e. how many cups were dropped at the venue without proper disposal) and/or the like. Venue staff could collect discarded cups and the cups returned in this manner could be counted, the venue staff could receive a proportion of the discarded cup money, the data could be used for cup cleaning purposes and/or the like.

In one example, a time period may be associated with usage of the cup or item or tableware. For example, a user may be given a pre-determined time period of free use of the cup. If the user uses the cup or item of tableware beyond that free usage time period, the user may then be charged for the use.

Once the cup or item of tableware has been returned to the venue or vendor by the customer, it can be taken to a washing or cleaning location. Further devices 16 can be provided to communicate data to and/or from the cup at the washing or cleaning location. For example, data can be communicated relating to the time, date and/or location of the washing or cleaning, where the cup has come from, where the cup is going to next, bacterial reports relating to the washing and/or cleaning process, damage to the cup, how many washes the cup has had in its life cycle and/or the like.

Other data that can be associated with the cup or item of tableware can include any or any combination of the date, time and/or location of manufacture of the cup or item of tableware; details on what the cup or item of tableware is, such as whether it is a cup, pint glass, half pint glass, wine glass, plate, bowl, disposable item, non-disposable item and/or the like; details on the expected life span of the cup or item of tableware; details relating to the value of the cup or item of tableware; any design or artwork associated with the cup or item of tableware - for example, some cups or items may have logos, advertising and/or the like provided on the same.; the weight and/or dimensions of the cup or item of tableware; the material or materials from which the cup or item of tableware has been manufactured from, what it has been used for containing and/or the like - this may be relevant if potentially hazardous substances are contained in the cup or item of tableware; any required CE certification and/or the like.

The data that is processed, stored and/or collected by the item of tableware micro-processing means, the central micro-processing means and/or the device 16 can be used to generate data reports, weekly reports, inventory reports and/or the like.

A full life cycle of an item of tableware can be calculated and provided from the point of manufacture to the point of disposal and/or recycling. Tracing and monitoring of the item of tableware from manufacture to disposal and/or recycling can also take place. It can allow a value to be allocated to the item of tableware and allows more efficient ordering of tableware, reduces wastage and unnecessary movement and ordering of tableware, thereby also improving the carbon footprint of the item of tableware.

Thus, according to the present invention a smart cup, smart item of tableware or smart rental item can be produced which has data processing, storage and/or communication capability to allow tracing, recycling and/or reuse of the rental item or items of tableware.

## Claims

1. A tableware or rental item tracing system, said system including at least one rental item for renting or lending to a third party in use or at least one item of tableware, **characterised in that** micro-processing means are provided on, in or in association with said at least one rental item or item of tableware.

2. The tableware or rental item tracing system according to claim 1, wherein the micro-processing means are arranged so as to store and/or process data relating to any or any combination of: the at least one rental item or item of tableware; a vendor, distributor and/or provider of the at least one rental item or item of tableware; or a user of the at least one rental item or item of tableware, in use.

3. The tableware or rental item tracing system according to any preceding claim, wherein the at least one rental item includes or consists of any or any combination of item is an item of tableware, an item of sports equipment, an item of machinery, a wrist band, or a venue pass to allow access to one or more parts of a venue in use; and/or the item of tableware includes or consists of any or any combination of a cup, glass, wine glass, bottle, tray, bowl, item of cutlery, pot, pan, dish, container, food receptacle, or drink receptacle.

4. The tableware or rental item tracing system according to any preceding claim, wherein the at least one item of tableware or rental item is a disposable item, non-disposable and/or recyclable item.

5. The tableware or rental item tracing system according to any preceding claim, wherein the system further includes any or any combination of a central or master micro-processing means, a central or master computer, or a cloud based information sharing platform locatable remotely from the tableware or rental item, and the tableware or rental item micro-processing means is arranged to communicate directly or indirectly with the same.

6. The tableware or rental item tracing system according to any preceding claim, wherein the system includes tableware or rental item data reading means arranged to read and/or receive data from the rental item or tableware micro-processing means; to process data from the rental item or tableware micro-processing means; to store data received from the rental item or tableware micro-processing means; and/or to communicate data with a central or master micro-processing means, a central or master computer and/or cloud based information sharing platform.

7. The tableware or rental item tracing system according to any preceding claim, wherein communication means are provided on or associated with the item of tableware or rental item, the tableware or rental item micro-processing means, the tableware or rental item reading means, the central or master computer, and/or the central or master micro-processing means.

8. The tableware or rental item tracing system according to any preceding claim, wherein unique identification means are provided on or associated with the at least one item of tableware or rental item, and/or tableware or rental item micro-processing means.

9. The tableware or rental item tracing system according to any preceding claim, wherein the micro-processing means of the at least one item of tableware or rental item, the tableware or rental item data reading means and/or the central or master micro-processing means includes or is in the form of a microchip, a communication chip and/or a near field communication (NFC) chip.

10. The tableware or rental item tracing system according to any preceding claim, wherein the communication means is arranged to communicate via Near Field Communication, one or more Infra-Red (IR) signals, Bluetooth, one or more radio frequency signals, WIFI, wired means, and/or a contact pad.

11. The tableware or rental item tracing system according to any preceding claim, wherein the tableware or rental item micro-processing means is integral with, embedded within, fixedly attached to or detachably attached to the item of tableware or rental item.

12. The tableware or rental item tracing system according to any preceding claim, wherein the data processed, stored, transmitted and/or received by the tableware or rental item micro-processing means, the tableware or rental item data reader means and/or the central or master micro-processing means, the central or master computer or the cloud based information sharing platform includes any or any combination of: tableware or rental item unique identification means; when, where and/or by whom the rental item or item of tableware was manufactured, distributed and/or sold; when, where and/or by whom the rental item or item of tableware was delivered to a venue; when, where and/or by whom the rental item or item of tableware was last cleaned; when, where and/or by whom a food, beverage, liquid, solid and/or the like was used and/or served with the item of tableware; a value of sale associated with the rental item or item of tableware and/or a food, beverage, liquid, solid and/or the like used or served with the item of tableware; a value of a deposit associated with the rental item or item of tableware and/or a food, beverage, liquid, solid and/or the like used or served with the item of tableware; details of a user using the rental item or item of tableware; when and/or where the rental item or item of tableware is returned to a return location; confirmation that the rental item or item of tableware has been returned to a return location; credit or payment card details relating to a customer of the rental item or item of tableware; the cleaning status of the rental item or item of tableware, Global Positioning Data (GPS) relating to where the rental item or item of tableware is or has moved to in real time and/or a period of time; a time period; or a date.

13. The tableware or rental item tracing system according to any preceding claim, wherein visual and/or audio means are provided with or associated with the rental item or tableware data reader means to allow display and/or sounding of data or information to a user.

14. The tableware or rental item tracing system according to any preceding claim, wherein the system further includes a recycling unit or device to allow recycling and/or returning of the rental item or item of tableware by a user after use.

15. A method of using a tableware or rental item tracing system, said system including at least one rental item for renting or lending to a third party in use or at least one item of tableware, **characterised in that** micro-processing means are provided on, in or in association with said at least one item of tableware or rental item and said method includes the step of storing, processing and/or communicating data via the rental item or tableware micro-processing means.
